# EUROPEAN PATENT APPLICATION

(11) **EP 2 056 613 A1**
(43) Date of publication of application: **06.05.2009**
(21) Application number: 07792465.2
(22) Date of filing: 13.08.2007
(51) Int. Cl.: H04Q 7/36

(54) **MOBILE COMMUNICATION SYSTEM, BASE STATION, USER DEVICE, AND METHOD**

(30) Priority: 22.08.2006 JP 2006225925
(71) Applicant: NTT DoCoMo, Inc., Chiyoda-ku Tokyo 100-6150 (JP)
(72) Inventor: KISHIYAMA, Yoshihisa, NTT DoCoMo, Inc., Tokyo 1006150 (JP); HIGUCHI, Kenichi, NTT DoCoMo, Inc., Tokyo 1006150 (JP); SAWAHASHI, Mamoru, NTT DoCoMo, Inc., Tokyo 1006150 (JP)
(74) Representative: HOFFMANN EITLE
(86) International application number: PCT/JP2007/065822
(87) International publication number: WO 2008/023596

(57) **Abstract**

A mobile communications system is disclosed. The mobile communications system includes: a first user apparatus for two-way communicating using frequency division duplex (FDD); a second user apparatus for two-way communicating using time division duplex (TDD) ; and a base station for communicating with the first and second user apparatuses. The base station distinguishes among the simultaneous transmitting and receiving schemes of the user apparatuses based on user-apparatus specific user identification information, flag information showing a simultaneous transmitting and receiving scheme that is included in an uplink control channel, or signatures, a proper use of which is made according to the simultaneous transmitting and receiving scheme.

## Description

### BACKGROUND OF THE INVENTION

### 1. Field of the Invention

The present invention relates to a mobile communications system, a base station, a user apparatus, and a method.

### 2. Description of the Related Art

Schemes for communicating two-way or transmitting and receiving simultaneously in a communications system generally include frequency division duplex (FDD) and time division duplex (TDD) schemes.
FIG. 1 shows a relationship with respect to frequencies and radio frames in the FDD scheme. In the FDD scheme, different frequencies are used for uplink and downlink, and signal transmission in each frequency band is conducted independently.
FIG. 2 shows a relationship with respect to frequencies and radio frames in the TDD scheme. In the TDD scheme, the same frequency is used for uplink and downlink, but the uplink and downlink channels are time-division duplexed. Thus, while two-way communications are not conducted simultaneously in a strict sense, simultaneous communications may be apparently (substantially) implemented.
FIG. 3 shows combining the FDD and TDD. The FDD/TDD scheme is designed such that different frequencies are used for uplink and downlink, and that transmit timings are not simultaneous for the uplink and downlink.

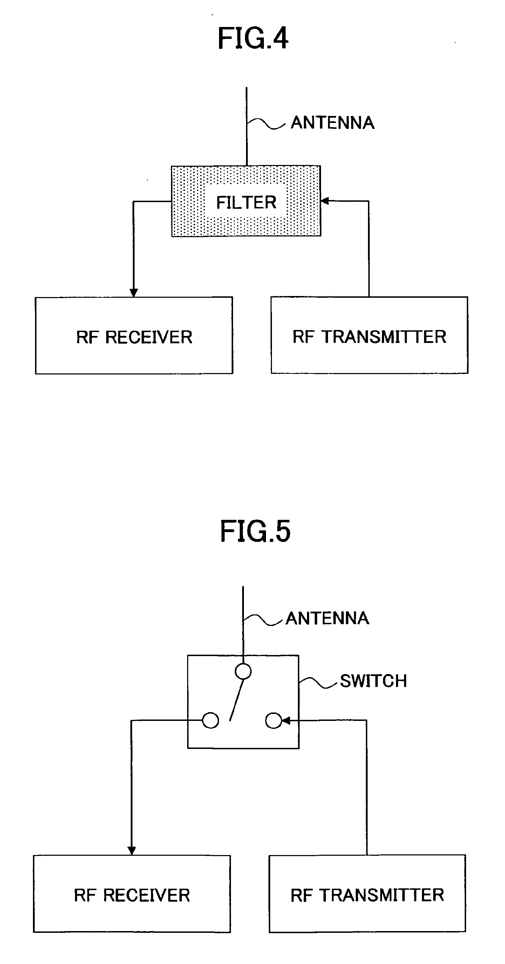

In the FDD scheme, different frequencies are used for the uplink and downlink, so that data may be continuously transmitted independently over the uplink and downlink. Therefore, the FDD scheme is preferable from the point of view of achieving a high transmission rate. However, a certain kind of filter is required to appropriately separate transmit and receive signals within apparatuses (a base station and a user apparatus) (FIG. 4). This is not advantageous for a terminal requiring minituarization. The FDD scheme is disclosed in Non-patent document 1, for example.

In the TDD scheme, the transmit and receive signals are processed at different times, so that such filters as described above are advantageously not mandatory (FIG. 5). Even in the FDD/TDD scheme, transmit timings for uplink and downlink are different, so that it is not necessary to provide the apparatus with any extensive filter. However, in the TDD or FDD/TDD scheme, it is difficult to continuously transmit data as it needs to be ensured that transmit timings do not coincide between the uplink and downlink. Therefore, the TDD method (and the FDD/TDD method) is not advantageous from the point of view of increasing the data transmission rate. The TDD scheme is disclosed in Non-patent document 2, for example.
Non-patent document 1:
   3GPP TS 25.201, "Physical layer - General description"
Non-patent document 2:
   Digital automobile telephone system: standard specification, Electric Wave System Development Center, RCR STD-27, April 30, 1991

### SUMMARY OF THE INVENTION

### [Problem(s) to be solved by the Invention]

The FDD scheme is adopted in W-CDMA, while the TDD/FDD scheme is adopted in personal digital cellular (PDC) and GSM systems. Both of the above schemes operate independently. Therefore, a user must have a terminal (user apparatus) ready for each system. If it were possible for user apparatuses of different simultaneous transmitting and receiving schemes to co-exist, it might be possible to construct a further user-friendly system. However, such a proposal has yet to be made. Moreover, even if it were possible for user apparatuses of different simultaneous transmitting and receiving schemes to co-exist in a system, a problem needs to be solved with respect to how to distinguish among user apparatuses of different simultaneous transmitting and receiving schemes.

The problem to be solved by the present invention is to provide a mobile communications system which allows user apparatuses of different simultaneous transmitting and receiving schemes to co-exist, and a base station, a user apparatus, and a method for use in the mobile communications system as described above.

### [Means for solving the Problem]

The present invention uses a mobile communications system which includes: a first user apparatus for two-way communicating using the frequency division duplex (FDD); a second user apparatus for two-way communicating using the time division duplex (TDD); and a base station for communicating with the first and second user apparatuses. The base station distinguishes among simultaneous transmitting and receiving schemes of the user apparatuses based on user-apparatus specific user identification information; flag information showing which simultaneous transmitting and receiving scheme is included in an uplink control channel; or signatures, a proper use of which is made according to the simultaneous transmitting and receiving scheme.

### [Advantage of the Invention]

The present invention makes it possible for user apparatuses of different simultaneous transmitting and receiving schemes to co-exist within a mobile communications system.

### BRIEF DESCRIPTION OF THE DRAWINGS

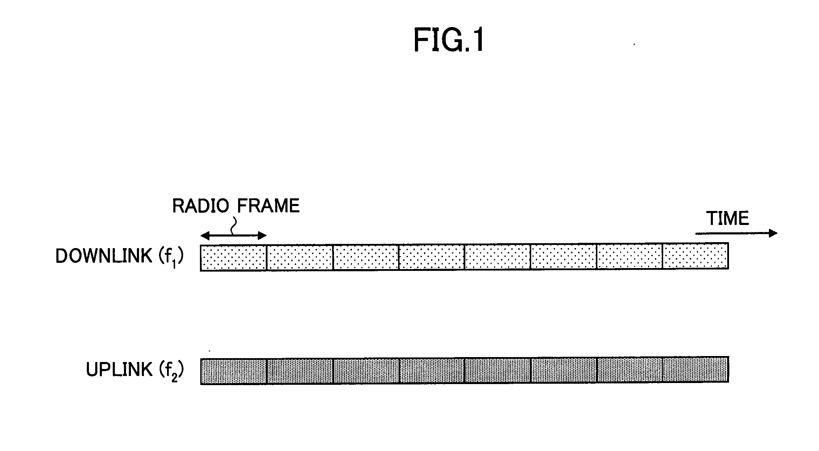

FIG.1 is a view for explaining a FDD scheme;

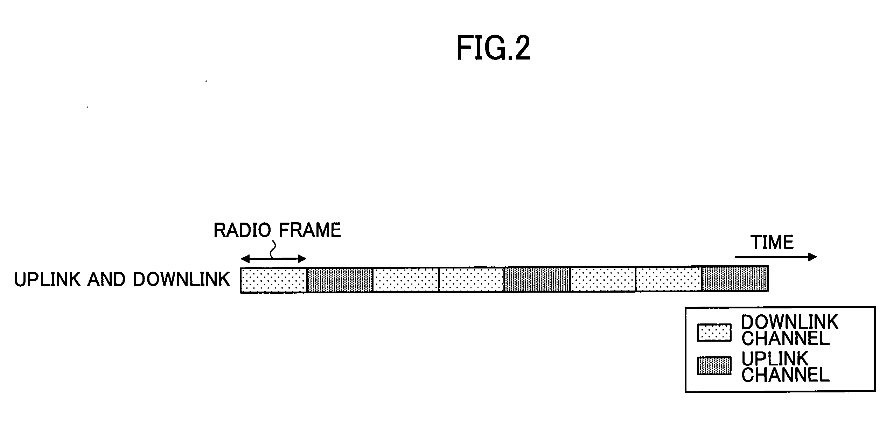

FIG.2 is a view for explaining a TDD scheme;

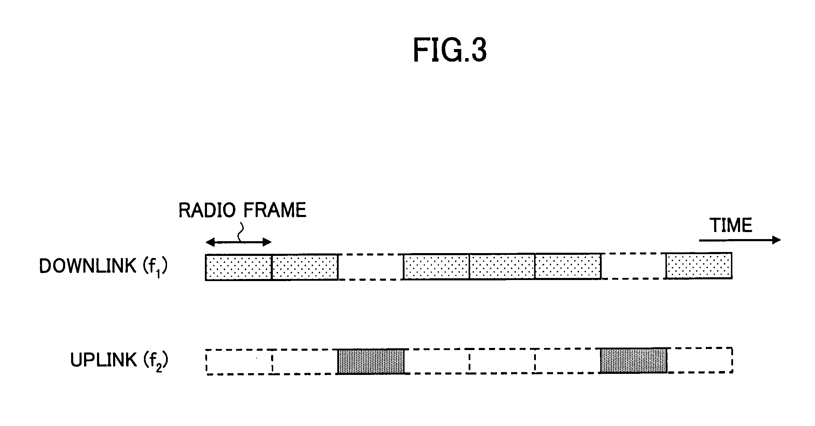

FIG.3 is a view for explaining an FDD/TDD scheme;
FIG. 4 is a diagram illustrating an FDD communications apparatus;
FIG. 5 is a diagram illustrating a TDD communications apparatus;

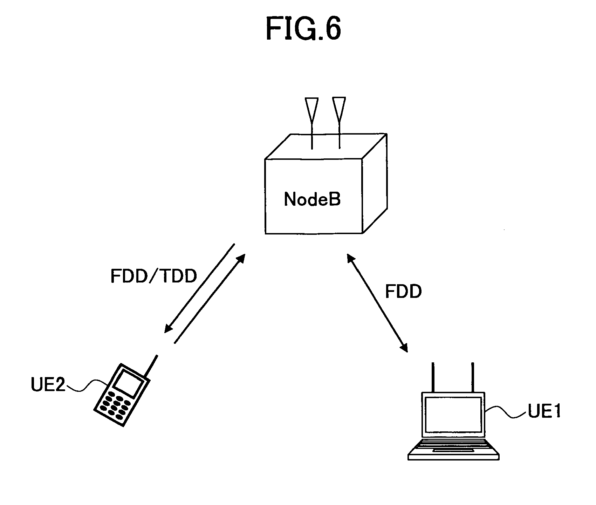

FIG. 6 is a conceptual diagram of a mobile communications system according to an embodiment of the present invention;

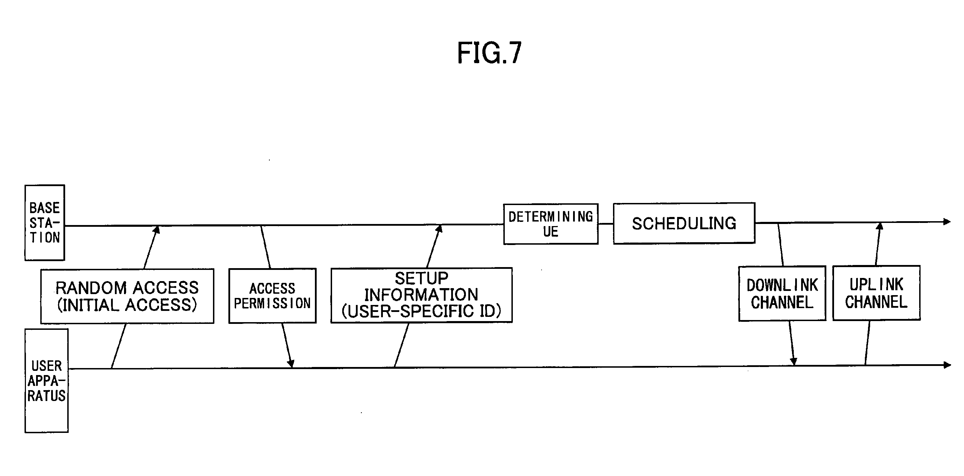

FIG.7 is a flowchart illustrating an operation according to an embodiment of the present invention; and

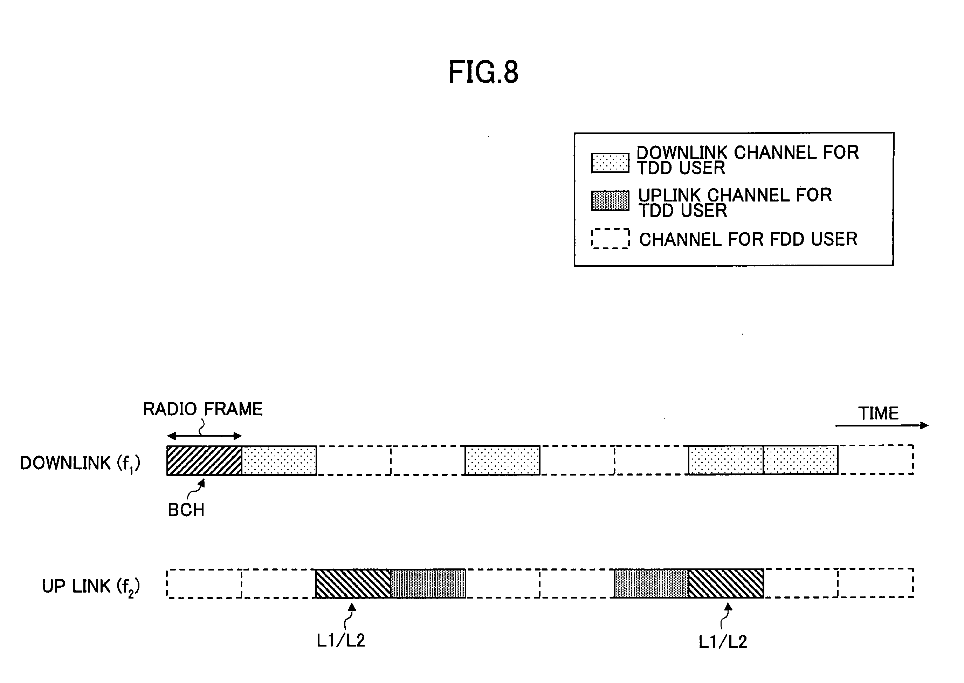

FIG. 8 is a diagram illustrating how scheduling is performed according to an embodiment of the present invention.

### DESCRIPTION OF THE PREFERRED EMBODIMENTS

### [Description of Notations]

FDD Frequency division duplex;
TDD Time division duplex;
UE1 First user apparatus;
UE2 Second user apparatus;
NodeB Base station;
BCH Broadcast channel;
L1/L2 L1/L2 control channel

### [Best Mode of Carrying Out the Invention]

The present invention has been described by breaking it down into a number of embodiments for the convenience of explanation. However, the breakdown to individual embodiments is not essential to the present invention, so that two or more embodiments may be used as required.

### Embodiment 1

FIG. 6 is a conceptual diagram of a mobile communications system according to an embodiment of the present invention. FIG. 6 shows a first user apparatus (UE1), a second user apparatus (UE2), and a base station (Node B).

The first user apparatus (UE1) is a user apparatus for two-way communicating using an FDD scheme. The user apparatus, which is typically a mobile terminal, may be a fixed terminal. The first user apparatus, which uses the FDD scheme, can achieve a high data rate.

The second user apparatus (UE2) is a user apparatus for two-way communicating using a TDD scheme. The user apparatus, which also is typically a mobile terminal, may be a fixed terminal. The second user apparatus, which uses the TDD scheme, communicates a voice packet (VoIP), for example. Thus, the second user apparatus may have a relatively low data rate, but is desirably compact.

The base station (Node B) communicates with the user apparatuses while determining how to allocate radio resources to which of the user apparatuses in uplink and downlink. The base station communicates with a communications element (for example, a core network) which is not shown.

FIG. 7 shows an operation performed at the base station and user apparatus according to one embodiment of the present invention. The user apparatus transmits a random access channel (RACH) to the base station at the start of communications. The random access channel is a channel for making a request for resource allocating. The random access channel, which may be transmitted from a user apparatus at an arbitrary timing, may collide with a channel from other user apparatuses. In the event of the collision, one or both of the user apparatuses would retransmit the channel.

When the random access channel is appropriately received by the base station, the base station allows access (access permission) and requests the user apparatus to provide further information.

The user apparatus reports further information (setup information) to the base station according to the access permission. The further information, which includes information necessary for resource allocation, typically includes user-specific identification information (ID). Required communications quality or other sets of information that the user apparatus desires may be reported to the base station.

The base station, in the step of "determining UE", determines whether the simultaneous communicating scheme of the user apparatus is FDD or FDD/TDD, based on the sets of information obtained from the user apparatus. Methods of determining the simultaneous communicating scheme of the user apparatus may include a number of methods, as shown in methods 1-3 below.

### (Method 1)

The user-apparatus specific identification information may be set such that it shows the FDD or TDD/FDD. For example, the identification information (an identification number) of an FDD user apparatus may be set within a range of #00000-#09999, while the identification information (the identification number) of a TDD user apparatus may be set within a range of #10000-#19999. If the identification number of the user apparatus is set under such rules as described above, the base station may refer to the identification of the user apparatus to specify what the simultaneous communicating scheme is. The identification information of the user apparatus may be reported to the base station as the setup information.

### (Method 2)

Flag information which indicates whether the simultaneous communicating scheme of the user apparatus is the FDD or TDD/FDD may be included in the uplink control channel. For example, it may be determined that if the flag information or flag bit is "1" then it is the FDD, while if the flag information or flag bit is "0", then it is the TDD/FDD. Such flag information may also be reported to the base station as the above-described setup information.

### (Method 3)

Signatures used in the random access channel may be pre-classified according to the simultaneous communicating scheme of the user apparatus. For example, the signatures #1-#10 may be reserved for an FDD user apparatus, while the signatures #11-#20 may be reserved for a TDD/FDD user apparatus. The user apparatus selects the signature and performs random access in accordance with its simultaneous communicating scheme. The base station may be able to determine which signature the user apparatus is using to determine the simultaneous transmitting and receiving scheme of the user apparatus. Such a method as described above makes it possible to determine the simultaneous communicating scheme of the user apparatus at a timing as early as an initial access.

Information for making proper use of the flag information or the signatures may be reported in the broadcast channel, or may be set specifically for the apparatuses.

In the step of "scheduling", the base station performs scheduling, and allocates radio resources to the user apparatuses. The scheduling may be one or both of time scheduling and frequency scheduling. Scheduling information which indicates the status of allocation of the radio resources to the uplink and/or downlink is reported to the user apparatus in the downlink control channel. According to the scheduling information, the user apparatus receives a downlink data channel, transmits an uplink control channel, or transmits an uplink data channel according to the scheduling information.

### Embodiment 2

FIG. 8 is a diagram illustrating how scheduling is performed according to an embodiment of the present invention. A scheduler of a base station determines scheduling information such that resource allocation is implemented over the uplink and downlink as exemplarily illustrated. In this case, a channel which must be transmitted, such as a broadcast channel (BCH) or an uplink L1/L2 control channel may be allocated a fixed radio resource in advance. For example, in the uplink L1/L2 control channel, information indicating the downlink channel status (CQI) needs to be periodically reported to the base station. Moreover, any occurrence of acknowledgement information (ACK/NACK) for the downlink data channel, which serves an essential role in retransmission control, should be speedily reported to the base station since whether to retransmit is directly linked to the magnitude of throughput. Therefore, it is desired that frequent opportunities for reporting CQI and acknowledgement information be secured in advance. Moreover, it is preferable that transmit timings do not overlap with respect to the broadcast channel and uplink L1/L2 control channels for a TDD user apparatus.

Now, in the case of the TDD, unlike in the case of the FDD, uplink and downlink transmit timings for individual user apparatuses need to be scheduled so that the timings differ. From a point of view of efficiently scheduling in this way, it is preferable to plan that radio resources are first allocated to the TDD user apparatus with the remaining radio resources to be allocated to the FDD user apparatus.

As described above, while the present invention is described with reference to specific embodiments, the respective embodiments are merely exemplary, so that a skilled person will understand various variations, modifications, alternatives, and replacements. While specific numerical value examples are used to facilitate understanding of the present invention, such numerical values are merely examples, so that any appropriate value may be used. Breakdown of the respective embodiments are not essential to the present invention, so that two or more embodiments may be used as needed. For convenience of explanation, while the apparatus according to the embodiments of the present invention is explained using functional block diagrams, such apparatus as described above may be implemented in hardware, software, or a combination thereof. The present invention is not limited to the above embodiments, so that variations, modifications, alternatives, and replacements are included in the present invention without departing from the spirit of the present invention.

The present international application claims priority based on Japanese Patent Application No. 2006-225925, filed on August 22, 2006, the entire contents of which are hereby incorporated by reference.

## Claims

1. A mobile communications system, comprising: a first user apparatus which conducts a two-way communication using frequency division duplex (FDD); a second user apparatus which conducts a two-way communication using time division duplex (TDD) ; and a base station which communicates with the first and second user apparatuses, wherein
the base station distinguishes among simultaneous transmitting and receiving schemes of the user apparatuses based on user-apparatus specific user identification information, flag information showing a simultaneous transmitting and receiving scheme included in an uplink control channel; or signatures, a proper use of which is made according to the simultaneous transmitting and receiving scheme.

2. The mobile communications system as claimed in claim 1, wherein the base station includes a scheduler which plans allocating a radio resource to a packet of the first and second user apparatuses, and a unit which reports, to the first and second user apparatuses, scheduling information indicating a status of allocating of the radio resource, wherein
the scheduling information of the second user apparatus is created such that uplink and downlink transmission timings differ.

3. The mobile communications system as claimed in claim 2, wherein
the scheduler plans allocating the radio resource to the second user apparatus, and allocates another radio resource to the first user apparatus.

4. A base station which is used in a mobile communications system, the base station communicating with a first user apparatus which conducts a two-way communication using frequency division duplex (FDD), and a second user apparatus which conducts a two-way communication using frequency division duplex/time division duplex (FDD/TDD), wherein
a simultaneous transmitting and receiving scheme of the user apparatuses is distinguished based on user-apparatus specific user identification information, flag information showing a simultaneous transmitting and receiving scheme included in an uplink control channel, or signatures, a proper use of which is made according to the simultaneous transmitting and receiving scheme.

5. The base station as claimed in claim 4, further including:
a scheduler which plans allocating a radio resource to a packet of the first and second user apparatuses, wherein
scheduling information for the second user apparatus is created such that transmit timings for the uplink and downlink differ.

6. The mobile communications system as claimed in claim 5, wherein
the scheduler plans allocating the radio resource to the second user apparatus, and allocates another radio resource to the first user apparatus.

7. A user apparatus which is used in a mobile communications system having a base station which communicates with user apparatuses of different simultaneous transmitting and receiving schemes, wherein an uplink control channel is transmitted which includes flag information indicating whether each of the simultaneous transmitting and receiving schemes is frequency division duplex (FDD) or frequency division duplex/time division duplex (FDD/TDD).

8. A method which is used in a mobile communications system which includes a first user apparatus which conducts a two-way communication using frequency division duplex (FDD), a second user apparatus which conducts a two-way communication using time division duplex (TDD), and a base station which communicates with the first and second user apparatuses, comprising the steps of:
by the base station, distinguishing among simultaneous transmitting and receiving schemes of the user apparatuses based on user-apparatus specific user identification information, flag information showing a simultaneous transmitting and receiving scheme included in an uplink control channel; or signatures, a proper use of which is made according to the simultaneous transmitting and receiving scheme; and
by the base station, planning to allocate a radio resource to the second user apparatus, and allocating another radio resource to the first user apparatus; and
reporting, to the first and second user apparatuses, scheduling information showing a status of allocating of the radio resources.
